# EUROPÄISCHE PATENTSCHRIFT

(11) **EP 2 419 811 B1**
(45) Veröffentlichungstag und Bekanntmachung des Hinweises auf die Patenterteilung: **02.08.2017**
(21) Anmeldenummer: 10724990.6
(22) Anmeldetag: 15.04.2010
(51) Int. Cl.: G06F 3/033, G06F 3/042

(54) **ANZEIGEFLÄCHE UND EINE DAMIT KOMBINIERTE STEUERVORRICHTUNG FÜR EINE DATENVERARBEITUNGSANLAGE**
DISPLAY SURFACE AND CONTROL DEVICE COMBINED THEREWITH FOR A DATA PROCESSING SYSTEM
SURFACE D'AFFICHAGE ET DISPOSITIF DE COMMANDE COMBINÉ AVEC CELLE-CI POUR UNE INSTALLATION DE TRAITEMENT DE DONNÉES

(30) Priorität: 16.04.2009 AT 5872009
(43) Veröffentlichungstag der Anmeldung: 22.02.2012
(73) Patentinhaber: isiQiri interface technologies GmbH, 4232 Hagenberg (AT)
(72) Erfinder: EBNER, Richard, A-4600 Wels (AT)
(74) Vertreter: Burgstaller, Peter
(86) Internationale Anmeldenummer: PCT/AT2010/000109
(87) Internationale Veröffentlichungsnummer: WO 2010/118450

(56) Entgegenhaltungen:
- EP-A2- 0 225 625
- EP-A2- 0 354 996
- WO-A1-2009/105801
- WO-A1-2010/006348
- WO-A1-2010/078609
- WO-A2-2007/038193
- WO-A2-2007/063448
- DE-A1- 3 413 372
- DE-A1- 3 511 757
- US-A- 6 034 765
- US-A1- 2003 180 692
- US-A1- 2004 178 325
- US-A1- 2007 125 937

## Beschreibung

Beispielsweise die EP 1 696 300 A1 beschreibt einen sogenannten optischen Joystick. Ein schwenkbar gelagerter Hebel ist an einem Ende mit einer Lichtquelle versehen, welche in Abhängigkeit von der Stellung des Hebels auf einen bestimmten Bereich einer mit einem Feld von lichtempfindlichen Zellen versehenen Fläche leuchtet. Üblicherweise werden die dadurch an den Zellen erzeugten elektrischen Signale durch einen Computer eingelesen und so gedeutet, dass der Joystick aus Sicht des Benutzer die gleichen Wirkungen auf den Computer hat, wie ein Joystick bei dem die Stellung über ohmsche Widerstände abgenommen wird. Typischerweise wird mit dem Joystick ein Cursorsymbol am Bildschirm des Computers bewegt. Je nachdem welchem Ort des Bildschirms welche Funktion zugeordnet ist sofern sich der Cursor dort befindet, kann dann durch betätigen eines Schalters oder der Entertaste eine bestimmte Aktion ausgelöst werden. Die lichtempfindlichen Zellen auf welche vom Hebel des Cursors aus hingeleuchtet wird, werden vom bedienenden Menschen im Normalfall nicht gesehen. Bei entsprechender Bauweise findet man mit einer kleinen Fläche lichtempfindlicher Zellen das Auslangen.

Die US 2007/0176165 A1 zeigt eine Bauweise für einen auf lichtempfindlichen organischen Halbleitern basierenden Positionsdetektor für einen auftreffenden Lichtpunkt. Der flächig aufgebaute Detektor besteht aus mehreren Schichten. Auf einem Substrat aus Glas oder einem biegsamen organischen Material erstreckt sich eine erste, flächige Elektrode, welche einen hohen ohmschen Widerstand aufweist. Auf diese folgt eine Schicht aus organischen photoaktiven Materialien innerhalb deren eine Donator- und eine Akzeptorschicht aneinander anliegen. Auf diese folgt wiederum eine flächige Elektrode, welche allerdings einen niedrigen ohmschen Widerstand aufweist. An ihrem Rand sind die photoaktiven Materialen mit zwei bis 8 punkt- oder linienartigen, voneinander beabstandeten Anschlusselektroden versehen. Trifft ein gebündelter Lichtstrahl mit passendem Wellenspektrum auf einen Punkt der Schicht aus photoaktiven Materialen so fließt ein Strom durch die einzelnen Anschlusselektroden. Aus der Größe des Stromes in den einzelnen Anschlusselektroden wird auf den Auftreffpunkt des Lichtstrahles durch eine Art Triangulation rückgerechnet.

Entsprechend der WO 2007/063448 A2 wird die Position eines Leuchtzeigers bezüglich eines Bildschirms mittels mehrerer Fotodioden bestimmt, welche neben dem Bildschirm angeordnet sind Der Zeigestrahl ist dabei sehr breit aufgefächert, seine Lichtintensität nimmt von seinem Zentrum her ab. Aus der Kenntnis der Intensitätsverteilung über die Querschnittsfläche des Lichtstrahles wird nach Messung der Intensität an den einzelnen Detektoren auf die Entfernung zur Querschnittsmitte des Strahles und damit auf den Punkt, an dem diese Strahlmitte auf die Anzeigenfläche trifft, rückgerechnet. Die erreichbare Positionsgenauigkeit ist insbesondere bei Ortsveränderung des den Zeigestrahl aussendenden Zeigegerätes relativ begrenzt.

Die US 2005/0103924 A1 beschreibt ein Schießtrainingsgerät unter Anwendung eines Computers. Das Zielgerät sendet einen Infrarot-Laserstrahl mit kreuzförmiger Querschnittsfläche auf einen mit einem Computer verbundenen Bildschirm. Der Rand des Bildschirmes ist durch eine Reihe von Photodioden eingefasst, über welche der Computer die die Position der Querschnittsfläche des Laserstrahls detektiert. Als "Schuss" wird der Laserstrahl durch das Zielgerät kurz ausgeschaltet. Der Computer zeigt daraufhin den Kreuzungspunkt der Balken der Querschnittsfläche des Laserstrahls vor dieser Unterbrechung am Bildschirm an.

Die WO 2007/038193 A2 beschreibt ein für die Eingabe an eine Datenverarbeitungsanlage zu verwendendes Gerät. In einer speziellen Ausführung und Anwendung sendet das Gerät einen Lichtstrahl mit kreuzförmiger Querschnittsfläche auf eine Bildschirmfläche an deren Rand Reihen von "punktuellen" photoelektrischen Sensoren angeordnet sind. Abhängig davon, welche der Sensoren durch einen Teil der Querschnittsfläche des Lichtstrahls getroffen werden, kann eine Datenverarbeitungsanlage, welche mit den Sensoren verbunden ist, errechnen, wo der Mittelpunkt der Querschnittsfläche des Lichtstrahls (also der Kreuzungspunkt der Querschnittslinien) liegt und dementsprechend eine Cursorposition zuordnen. In einem Satz über den der D1 zu Grunde liegenden Stand der Technik wird in der D1 auch erwähnt, dass für Präsentationen und Spiele auch Laser als Zeigegeräte angewendet werden.

Durch die DE 34 13 372 A1 wird schon 1985 ein Detektor für den Auftreffpunkt eines Lichtstrahles auf einer Fläche vorgestellt, , wobei die Fläche ein Lumineszenzlichtwellenleiter ist, wobei photoelektrische Sensoren zueinander beabstandet am Rand der Fläche angeordnet sind und wobei aus den durch diese Sensoren gemessen Signalen durch eine elektronische Auswerteschaltung auf die genaue Position des Auftreffpunktes auf der Fläche rückgeschlossen wird. Dabei wird ausgenutzt, dass die Stärke der Signale an den photoelektrischen Sensoren mit der Entfernung der Sensoren vom Auftreffpunkt des Lichtstrahls auf der Fläche abnimmt. Es wird auch darauf hingewiesen, dass die anfallenden elektronischen Daten gespeichert werden können. Gemäß der Schrift wird der Detektor bevorzugt als Zielscheibe verwendet, wobei die Waffe mit der man darauf zielt und "schießt" keine Projektil abfeuert sondern nur einen Lichtstrahl. Eine Verwendung des Detektors als Eingabegerät für eine Datenverarbeitungsanlage, also nicht dazu etwas in der Umgebung zu messen, sondern nur dazu die Datenverarbeitungsanlage zu steuern, ist nicht vorgesehen.

Die DE 3511757 A1, veröffentlicht 1986, beschreibt eine optische Positionsmesseinrichtung, bei welcher an oder in einer lichtwellenleitenden Fläche fluoreszierende Moleküle angeordnet sind, welche von außen auftreffendes Licht in langwelligeres, diffus gestreutes Licht umwandeln, welches in der lichtwellenleitenden Fläche zu deren Flächenrändern hin geleitet wird und dort in seiner Intensität durch Sensoren erfasst wird. Da die Intensität des gemessenen Lichtes mit der Entfernung zum Auftreffpunkt des Lichtstrahles abnimmt, kann durch Kombination der Messergebnisse aus mehreren Sensoren auf den Auftreffpunkt des Lichtstrahles rückgeschlossen werden. Die Verwendung dieses Prinzips für ein Eingabegerät einer Datenverarbeitungsanlage ist nicht angedacht.

Die US 6 034 765 A zeigt eine Bauweise für einen auf lichtempfindlichen Halbleitern basierenden Positionsdetektor für einen auftreffenden Lichtpunkt. Der flächig aufgebaute Detektor besteht aus mehreren Schichten. Auf einem Substrat aus Glas oder einem biegsamen organischen Material erstreckt sich eine erste, flächige Elektrode, welche einen hohen ohmschen Widerstand aufweist. Auf diese folgt eine Schicht aus fotoaktiven Materialien, welche beim Auftreffen eines Lichtimpulses ein elektrisches Signal generieren. Auf diese Schicht folgt wiederum eine flächige Elektrode, welche allerdings einen niedrigen ohmschen Widerstand aufweist.

Die hochohmige Elektrode ist an gegenüberliegenden Rändern mit Anschlusselektroden versehen. Trifft ein Lichtstrahl mit passendem Wellenspektrum auf einen Punkt der Schicht aus fotoaktiven Materialen so fließt ein Strom durch die einzelnen Anschlusselektroden. Aus der Größe des Stromes in den einzelnen Anschlusselektroden wird auf den Auftreffpunkt des Lichtstrahles durch eine Art Triangulation rückgerechnet.

Der Erfinder hat sich die Aufgabe gestellt, eine Anzeigefläche und eine damit kombinierte Steuervorrichtung für eine Datenverarbeitungsanlage zu schaffen, wobei an einer Anzeigefläche mit Hilfe eines von einer Leuchteinrichtung ausgesandten Zeigestrahls ein Cursor zwecks Eingabe an eine Datenverarbeitungsanlage gesteuert werden kann. Gegenüber der Bauweise entsprechend der WO 2007/063448 A2 soll die Cursorposition genauer steuerbar sein und die Funktion der Vorrichtung soll weniger davon abhängig sein, wo im Raum sich das den Leuchtzeiger ausstrahlende Zeigergerät relativ zur Anzeigenfläche befindet. Gegenüber der gemäß der US 2005/0103924 A1 sollen ohne Verlust an Genauigkeit Kosteneinsparungen ermöglicht werden.

Zum Lösen der Aufgabe wird eine Anzeigefläche und damit kombinierte Steuervorrichtung für eine Datenverarbeitungsanlage vorgeschlagen wie in Anspruch 1 definiert. Es wird vorgeschlagen, wie bei der der US 2005/0103924 A1 einen Zeigestrahl zu verwenden, dessen Querschnittsfläche über die Anzeigenfläche hinaus ragt und aus mehreren Linien besteht und weiters am Rand der Anzeigefläche optische Sensoren anzubringen, aus deren gemessenen Signalen die Datenverarbeitungsanlage die Position des Zeigestrahls errechnet. Als entscheidende Verbesserung wird vorgeschlagen, entlang des Randes der Anzeigenfläche mehrere streifenförmige optische Positionsdetektoren anzuordnen, welche durch einen Schichtaufbau aus einem organischem Material gebildet sind, in welchem in Abhängigkeit von absorbiertem Licht elektrische Signale generiert werden, wobei der Schichtaufbau eine Mehrzahl von Abgreifpunkten für die erzeugten Signale aufweist, wobei die Größe der Signale an den einzelnen Abgreifpunkten von deren Entfernung zu den Teilflächen abhängig ist an welchen das Licht absorbiert wird und wobei aus den Größenverhältnissen zwischen den Signalen an mehrere Abgreifpunkten die Entfernungsverhältnisse der jeweiligen Abgreifpunkte zu jenen Teilflächen, an welchen das Licht absorbiert wird, errechenbar ist.

Indem nicht lauter einzelne Photodioden verwendet werden, sondern ein durchgehender photoempfindlicher Schichtaufbau, wobei aus den Verhältnissen von Größen von an mehreren Abgreifpunkten abgenommenen Signalen auf die Auftreffpunkte von Licht auf den Schichtaufbau rückgerechnet wird, werden die Hardwarekosten sowohl für den optischen Detektor als auch für die nachfolgende Interface-Elektronik, gegenüber der vorbekannten Bauweise stark verringert.

In einer vorteilhaften Ausführungsform ist ein Positionsdetektor als streifenförmiger, flächiger Lichtwellenleiter aufgebaut, an welchem zueinander beabstandet eine kleine Anzahl "herkömmlicher" photoelektrischer Sensoren, typischerweise Silizium-Fotodioden angebracht sind, aus deren gemessenen Signalen auf die Position eines auf die Steuerfläche treffenden Lichtpunktes zurückgerechnet wird. Dabei weist zumindest eine Schicht des flächigen Lichtwellenleiters photolumineszente Eigenschaften auf. Dieser Aufbau ist robust, kostengünstig, in weitem Bereich unabhängig vom Einstrahlungswinkel des Zeigestrahls und zudem gut auf selektive Detektion eines engen Spektralbereiches einstellbar.

Ähnliche Vorteile weist eine weitere vorteilhafte Ausführungsform des Positionsdetektors auf. Dabei weist der Positionsdetektor eine Schicht aus einem organischen photoaktiven Material auf, welche beiderseits durch eine flächige Elektrode angeschlossen ist, wobei eine der beiden Elektroden innerhalb ihres Stromkreises einen relativ hohen ohmschen Widerstand aufweist, wobei der Strom durch diese schlecht leitende Elektrode an mehreren voneinander beabstandeten Anschlusspunkten gemessen wird und aus der relativen Größe der an den unterschiedlichen Anschlusspunkten gemessenen unterschiedlichen Ströme zueinander, die Position einer durch Lichtabsorption hervorgerufenen, lokalen leitenden Verbindung durch die photosensitive Schicht errechnet wird.

In einer sehr vorteilhaften Ausführungsform sind unterschiedliche Querschnittsflächenbereiche des Zeigestrahls unterschiedlich codiert, typischerweise kann die Lichtintensität von unterschiedlich ausgerichteten Linien der Querschnittsfläche des Zeigestrahls mit unterschiedlichen Frequenzen schwanken. Dadurch wird aus den Signalen, die an den optischen Detektoren gemessen werden, für die Datenverarbeitungsanlage nicht nur die Position des Zeigestrahls erkennbar, sondern auch die Winkellage des Zeigestrahls um seine Längsachse in einem Messbereich von bis zu 360°. Damit stehen für die Eingabe an einen Computer mittels Cursor nicht nur zwei lineare Dimensionen der Position des Cursors zur Verfügung sondern zusätzlich auch eine Winkeldimension des Cursors.

Da die Querschnittsabmessungen des Zeigestrahls sehr groß sind und bestimmungsgemäß über die Anzeigenfläche hinaus verlaufen, werden die zur Positionsmessung des Zeigestrahls an der Anzeigefläche dienenden Querschnittsflächenbereiche des Zeigestrahls bevorzugt in einem für das menschliche Auge nicht sichtbaren Spektralbereich - aus Kostengründen weiter bevorzugt im Infrarotbereich - ausgesandt. In einer vorteilhaften Weiterentwicklung dazu wird im Zentrum dieses Zeigestrahls ein zusätzlicher Zeigestrahl mit kleineren Querschnittsabmessungen im sichtbaren Spektralbereich mitgesandt, dessen Position auf der Anzeigenfläche bei ordnungsgemäßer Funktion aller Komponenten mit der durch die Datenverarbeitungsanlage zu errechnenden Cursorposition zusammenfällt. Die Position dieses zweiten Zeigestrahls braucht nicht durch technische optische Sensoren erfassbar zu sein. Er dient nur dazu, die Position des Zeigestrahls dem Anwender direkt zu zeigen, unabhängig davon, welchen Zustand die Datenverarbeitungsanlage gerade hat und davon ob überhaupt auf die Anzeigenfläche gezeigt wird.

Der Aufbau von erfindungsgemäß angewandten Positionsdetektoren ist in den Zeichnungen vereinfacht und beispielhaft skizziert:
- Fig. 1:: zeigt eine beispielhafte, erfindungsgemäße Anzeigenfläche in Frontalansicht.
- Fig. 2:: zeigt einen Positionsdetektor von Fig. 1 in Seitenansicht. Aus Sichtbarkeitsgründen sind dabei die Schichtdicken unverhältnismäßig vergrößert dargestellt.
- Fig. 3:: zeigt ein zweites Ausführungsbeispiel eines für den erfindungsgemäßen Aufbau verwendbaren Positionsdetektors in Seitenansicht. Aus Sichtbarkeitsgründen sind dabei die Schichtdicken unverhältnismäßig vergrößert dargestellt.

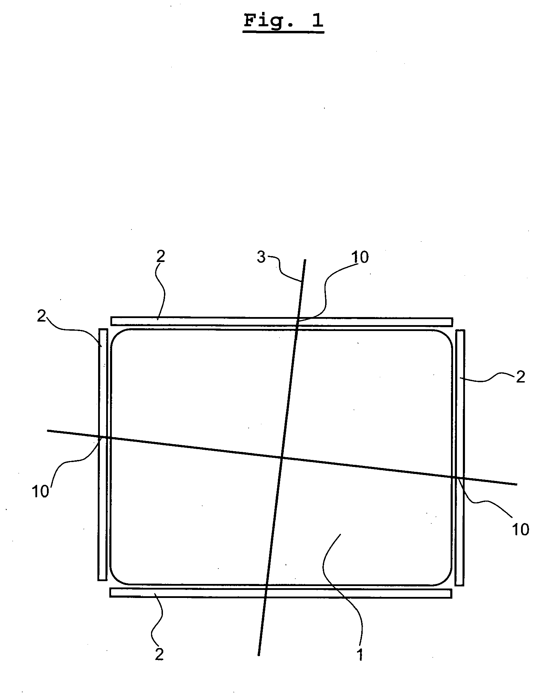

An den vier Seitenlinien der etwa rechteckförmigen Anzeigenfläche 1 gemäß Fig. 1 sind parallel zu den Seitenlinien optische Positionsdetektoren 2 angebracht, welche jeweils die Form eines schmalen Streifens aufweisen und dazu in der Lage sind, bezüglich ihrer Längsrichtung die Position eines auf sie auftreffenden Lichtpunktes zu detektieren. In Fig. 1 ist der Zeigestrahl 3 in Querschnittsansicht sichtbar. In diesem Beispiel wird die Querschnittsform des Zeigestrahls 3 durch zwei senkrecht aufeinander stehende, und einander kreuzende Linien gebildet. Die Position der Schnittpunkte 10 dieser Linien an den einzelnen Positionsdetektoren 2 wird von den einzelnen Positionsdetektoren an die zu steuernde Datenverarbeitungsanlage weitergeleitet. Die Datenverarbeitungsanlage kann die Position des Schnittpunktes der beiden Querschnittslinien des Zeigestrahls 3 auf der Anzeigenfläche als Schnittpunkt jener beiden Geraden errechnen, welche jeweils die beiden Schnittpunkte 10 an zwei gleich ausgerichteten Positionsdetektoren verbinden. Diesen Koordinaten kann durch das auf der Datenverarbeitungsanlage laufende Betriebssystem die Stellung eines Cursors, also einer ansonsten üblicherweise mittels "Maus" bewegter Einfügemarke, Schreibmarke bzw. Eingabemarkierung auf der Anzeigefläche zugeordnet werden.

Für die Positionsbestimmung des Zeigestrahls ist nicht die Lichtintensität des an den einzelnen Positionsdetektoren auftreffenden Teils des Zeigestrahls von Bedeutung, sondern nur die Koordinate des Auftreffpunktes an den Positionsdetektoren in deren Längsrichtung. Damit wird die Messgenauigkeit in einem weiten Bereich unabhängig von der Entfernung des den Zeigestrahl aussendenden Zeigegeräts.

Da sich die Querschnittsabmessungen des Zeigestrahls mit sich verringerndem Abstand vom Zeigegerät verringern, ist die richtige Funktion nur dann gegeben, wenn das Zeigegerät nicht zu nah an der Anzeigenfläche angeordnet ist, da dann nicht mehr alle Positionsdetektoren durch den Leuchtzeiger getroffen werden. Diese Einschränkung lässt sich aber durch eine entsprechend starke Aufweitung des Zeigestrahls gut beherrschen.

Indem die Querschnittsform des Zeigestrahls durch zwei gerade, einander kreuzende Linien gebildet wird und als Punkt, welche die Cursorposition auf der Anzeigenfläche definiert, der Kreuzungspunkt dieser Linien hergenommen wird, ist die Messung auch unabhängig davon, aus welcher Richtung der Zeigestrahl auf die Positionsdetektoren auftrifft, so lange er nur von der Vorderseite her auftrifft.

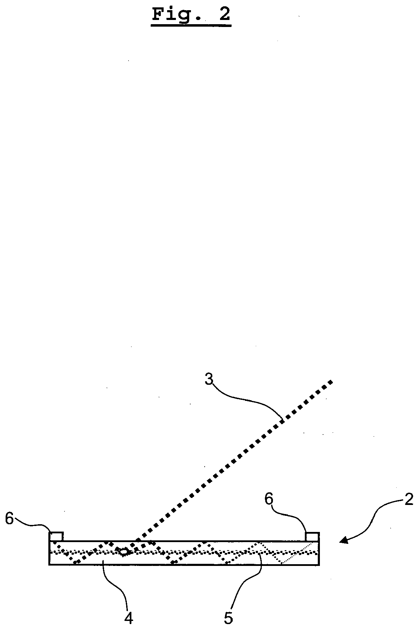

In dem in Fig. 2 skizzierten Ausführungsbeispiel für einen Positionsdetektor 2, besteht dieser aus einem wenige Millimeter breiten Streifen. Zwischen zwei ca. 0.1 mm dicken Deckschichten 4 aus PET ist eine ca. 0.001 mm dicke Schicht 5 aus einer homogenen Mischung des Kunststoffs Polyvinylalkohol und des Farbstoffs Rhodamin 6G laminiert. Die PET-Schichten 4 bilden mit der dazwischen liegenden Schicht 5 einen Lichtwellenleiter. Die Schicht 5 ist photolumineszent. An beiden Enden des Positionsdetektors 2 ist als photoelektrischer Sensor 6 jeweils eine Silizium-Photodiode angeordnet, welche eine Querschnittsfläche von beispielsweise 2x2 mm² aufweisen kann. Die Photodioden sind so an der frei liegenden Seite einer der beiden PET-Schichten 4 angebracht, dass sie Licht aus der PET-Schicht auskoppeln und an ihren pn-Übergang einkoppeln. Die Signale aller Photodioden werden über elektrische Leitungen und eventuell einen Frequenzfilter der Datenverarbeitungsanlage zugeführt in welcher sie gemessen und verarbeitet werden. Wenn ein Lichtfleck mit passendem Spektrum auf die Schicht 5 trifft, so löst er Lumineszenz in den integrierten Partikeln aus. Das dabei entstehende, langwelligere Licht wird zum großen Teil in den durch die Schichten 4 und 5 gebildeten Wellenleiter eingekoppelt. Das Licht in der Wellenleitermode schwächt sich durch die Verteilung und Dämpfung im Wellenleiter ab. Somit wird an den photoelektrischen Sensoren 6 eine unterschiedliche Intensität des Lichts in der Wellenleitermode gemessen, je nachdem wie weit der Auftreffpunkt des die Lumineszenz erzeugenden Lichts vom photoelektrischen Sensor entfernt ist. Durch Vergleich der Signale an den verschiedenen Sensoren kann auf die Position des Auftreffpunktes zurückgeschlossen werden. Die Absolutgröße der einzelnen Signale ist dabei unbedeutend, wichtig ist nur ihr Größenverhältnis zueinander. Zwecks Erhöhung der möglichen Positionsauflösung können je Detektor mehr als zwei photoelektrische Sensoren 6 angebracht werden. Die mögliche Auflösung ist jedenfalls vielfach feiner als der Abstand zwischen zwei photoelektrische Sensoren 6.

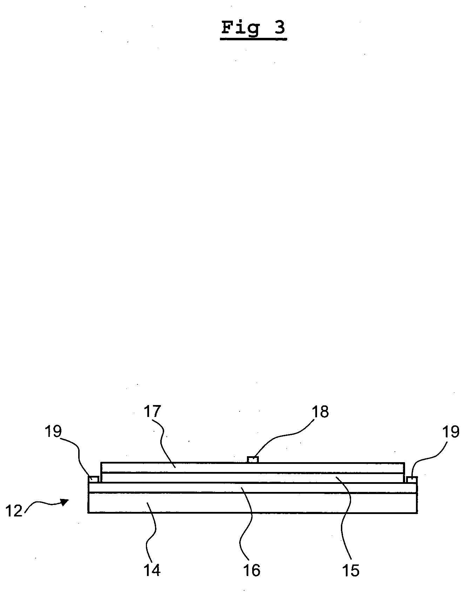

Gemäß Fig. 3 ist in Seitenansicht ein weiterer beispielhafter streifenförmiger Positionsdetektor 12 gezeigt. Auf einem elektrisch isolierenden, lichtdurchlässigem Substrat 14, welches beispielsweise eine Kunststofffolie sein kann, ist eine transparente oder semitransparente flächige Elektrode 16 angeordnet, welche "schlecht leitet", also zwar aus einem elektrisch leitfähigem Material besteht, aber innerhalb des Systems einen nennenswertem ohmschen Widerstand darstellt. Diese "schlecht leitfähige Elektrode" kann eine sehr dünne Metallschicht sein, ein transparentes leitfähiges Oxid (TCO), ein leitfähiges Polymer oder sie kann ein Carbon Nanotube Network sein. Die Schichtdicke dieser Elektrode ist so bemessen, dass ihr Flächenwiderstand bei Stromfluss einen signifikanten Spannungsabfall im jeweiligen Stromkreis verursacht. Zwei an den gegenüberliegenden Enden des Positionsdetektors angeordnete Anschlusspunkte 19 stellen die Verbindung der schlecht leitfähigen Elektrode 16 mit einem äußeren Stromkreis dar.

Die an die "schlecht leitfähige Elektrode" 16 anschließende, mit ihr leitend verbundene Schicht ist eine photoaktive organische Halbleiterschicht 15. Diese Schicht kann ein Photoleiter sein oder ein photovoltaisch aktives Element. Das heißt bei Absorption von Licht kann ihr elektrischer Widerstand zusammenbrechen, oder es kann eine elektrische Spannung zwischen zwei Grenzflächen der Schicht erzeugt werden. Im ersten Fall kann bei Anliegen einer äußeren Spannung ein Strom fließen, im zweiten Fall kann ein Strom fließen, indem der Stromkreis über eine äußere Schleife geschlossen wird.

An der zweiten Seite der photoaktive organische Halbleiterschicht 15 folgt leitend damit verbunden eine flächige Elektrode 17, welche im Vergleich mit den anderen Bauelementen des Stromkreises idealerweise einen sehr geringen ohmschen Widerstand aufweist. Sie kann durch eine Metallschicht, ein leitfähiges Polymer, ein leitfähiges Oxid oder auch durch ein Carbon Nanotube Network gebildet sein. Wenn die Elektrode 17 aus dem gleichen Material besteht wie die Elektrode 16, so sollte sie wesentlich größere Dicke als Elektrode 16 aufweisen. Die Leitfähigkeit der Elektrode 17 kann durch daran anliegende, mit ihr leitend verbundene Drähte oder Folien aus einem gut elektrisch leitfähigen Metall unterstützt werden. Die Elektrode 17 ist über einen Anschlusspunkt 18 mit einem äußeren Stromkreis verbindbar.

Trifft ein gebündelter Lichtstrahl mit passendem Wellenspektrum auf einen Punkt der photoaktiven organischen Halbleiterschicht 15, so fließt ein Strom durch die schlecht leitfähige Elektrode 16 zu den Anschlusspunkten 19. Auf Grund des ohmschen Widerstandes der Elektrode 16 ist die Größe des Stromes in den einzelnen Anschlusspunkten 19 stark von ihrer ihre Nähe zum Auftreffpunkt des Lichtstrahls abhängig. Dadurch kann durch Messung der einzelnen Ströme aus deren Größenverhältnis zueinander auf den Auftreffpunkt des Lichtstrahles rückgerechnet werden. Zwecks Erhöhung der möglichen Positionsauflösung können mehr als zwei Anschlusspunkte 19 angebracht werden. Die mögliche Auflösung ist jedenfalls vielfach feiner als der Abstand zwischen zwei Anschlusspunkten 19.

Der Problematik, dass Umgebungslicht nicht fälschlicherweise als Auftreffpunkt des Leuchtzeigers zur Festlegung des Cursors interpretiert werden darf, ist Rechnung zu tragen. Dies kann im Wesentlichen durch drei Methoden geschehen:
- Der Spektralbereich des Lichtes welchen die Detektoren wahrnehmen und in welchem der Leuchtzeiger arbeitet liegt anders als der des aus der Umgebung eintreffenden Lichtes bzw. des Lichtes, welches zur Anzeige dient.
- Der Lichtstrahl des Leuchtzeigers ist frequenzcodiert, d.h. seine Intensität schwankt zeitlich mit einer bestimmten Frequenz. Diese Frequenz wird mit nachrichtentechnischen Mitteln aus den von den Positionsdetektoren gelieferten Signalen herausgefiltert.
- Das Licht des Leuchtzeigers weist in einem sehr engen Spektralbereich eine markant höhere spektrale Leistungsdichte auf, als sie ansonsten vorkommt. Die Positionsdetektoren selektieren erstens möglichst genau diesen Spektralbereich und im Rahmen der dabei detektierten Signale werden nur solche als kennzeichnend für die Cursorposition zugelassen, deren Stärke über einem gewissen Grenzpegel liegt.

Durch Frequenzcodierung von Zeigestrahlen kann nicht nur zwischen einzelnen Querschnittsbereichen eines Zeigestrahls unterschieden werden, sondern es kann auch zwischen mehreren unterschiedlich kodierten Zeigestrahlen unterschieden werden. In Kombination mit einer Ausleselektronik mit Frequenzfiltern (lock-in-Technik) können so auch mehrere Zeigestrahlen mit verschiedenen Frequenzen gleichzeitig verfolgt werden.

Neben der Frequenzcodierung gibt es natürliche weitere Codierungsmöglichkeiten. Beispielsweise kann verschiedenen Zeigestrahlen bzw. Teilquerschnittsflächen davon innerhalb eines gemeinsamen zeitlichen Taktintervalls ein unterschiedliches Teilintervall zugeordnet sein in welchem nichts anderes strahlen darf.

## Patentansprüche

1. Anzeigefläche **(1)** und damit kombinierte Steuervorrichtung für eine Datenverarbeitungsanlage, wobei die Position eines auf die Anzeigenfläche treffenden **Zeigestrahls (3)** gemessen wird und das Messergebnis durch die Datenverarbeitungsanlage als Basis zur Festlegung einer Cursorposition an der Anzeigenfläche herangezogen wird, wozu entlang des Randes der Anzeigenfläche **(1)** streifenförmige optische Positionsdetektoren **(2)** angeordnet sind, deren gemessene Signale in die Datenverarbeitungsanlage **(1)** eingespeist werden, wobei die Querschnittsform des Zeigestrahls **(3)** durch mehrere Linien gebildet ist und die Querschnittsabmessungen des Zeigestrahls **(3)** sowohl über die Anzeigenfläche **(1)** als auch die daran angeordneten Positionsdetektoren **(2)** hinaus ragen, **dadurch gekennzeichnet, dass die** optischen Detektoren durch einen Schichtaufbau aus einem organischem Material gebildet **sind,** welcher in Abhängigkeit von absorbiertem Licht elektrische Signale generiert und mit einer Mehrzahl von Abgreifpunkten **(6, 19)** für die erzeugten Signale ausgestattet ist, wobei die Größe der Signale an den einzelnen Abgreifpunkten **(6, 19)** von deren Entfernung zu den Teilflächen abhängig ist, an welchen das Licht absorbiert wird, und wobei aus den Größenverhältnissen zwischen den Signalen an mehreren Abgreifpunkten **(6, 19)** die Entfernungsverhältnisse der jeweiligen Abgreifpunkte **(6, 19)** zu jenen Teilflächen, an welchen das Licht absorbiert wird, errechenbar ist.

2. Anzeigefläche und damit kombinierte Steuervorrichtung nach Anspruch 1, **dadurch gekennzeichnet, dass** ein Positionsdetektor (2) als streifenförmiger, flächiger Lichtwellenleiter aufgebaut ist, an welchem **als Abgreifpunkte (6)** photoelektrische Sensoren (6) angebracht sind, aus deren gemessenen Signalen auf die Position eines auf die Steuerfläche treffenden Lichtpunktes zurückgeschlossen wird, wobei zumindest eine Schicht (5) des flächigen Lichtwellenleiters photolumineszente Eigenschaften hat.

3. Anzeigefläche und damit kombinierte Steuervorrichtung für eine Datenverarbeitungsanlage nach Anspruch 1, **dadurch gekennzeichnet, dass** ein Positionsdetektor (12) als streifenförmiger, flächiger Positionsdetektor auf Basis einer Schicht (15) aus einem organischen photoaktiven Material ausgebildet ist, welche beiderseits durch eine flächige Elektrode (16, 17) angeschlossen ist, wobei eine Elektrode (16) innerhalb ihres Stromkreises einen relativ hohen ohmschen Widerstand aufweist, wobei der Strom durch diese schlecht leitende Elektrode (16) an mehreren voneinander beabstandeten Anschlusspunkten (19), **welche als Abgreifpunkte (19) dienen** gemessen wird und aus der relativen Größe der an den unterschiedlichen Anschlusspunkten (19) gemessenen unterschiedlichen Ströme zueinander, die Position einer durch Lichtabsorption hervorgerufenen, lokalen leitenden Verbindung durch die photosensitive Schicht (15) errechnet wird.

4. Anzeigenfläche und damit kombinierte Steuervorrichtung für eine Datenverarbeitungsanlage nach einem der bisherigen Ansprüche, **dadurch gekennzeichnet, dass** unterschiedliche Querschnittsflächenbereiche des Zeigestrahls (3) durch Strahlungen mit unterschiedliche Codierungsmerkmalen gebildet sind.

5. Anzeigefläche und damit kombinierte Steuervorrichtung für eine Datenverarbeitungsanlage nach einem der bisherigen Ansprüche, **dadurch gekennzeichnet, dass** das Spektrum des durch die Positionsdetektoren (2) detektierbaren Zeigestrahls (3) in einem für das menschliche Auge nicht sichtbaren Spektralbereich liegt und dass durch das Zeigegerät, welches diesen Zeigestrahl (3) aussendet gleichzeitig mit dem Zeigestrahl (3) ein zusätzlicher Zeigestrahl aussendbar ist, dessen Farbspektrum im sichtbaren Spektralbereich liegt und dessen Strahlquerschnittsfläche kleinere Abmessungen aufweist als jene des Zeigestrahls (3).

## Claims

1. Display area (1) and a control unit combined with it for a data processing system, wherein the position of a pointer beam (3) hitting the display area is measured and the data processing system considers the measured result as the basis for determining a cursor position on the display area, for which purpose strip-shaped optical position detectors (2) are arranged along the margin of the display area (1), whose measured signals are inputted into the data processing system, whereas the cross-sectional shape of the pointer beam (3) is formed by several lines and the cross-sectional dimensions of the pointer beam (3) protrude over both the display area (1) as well as the position detectors (2) arranged along it, **characterised in that** the optical detectors are formed by a layer structure of organic material, which generates electrical signals in dependency on the absorbed light and which is equipped with a multitude of tapping points (6, 19) for the generated signals, whereas the strength of the signals on the individual tapping points (6, 19) depends on their distance from the partial areas on which the light is absorbed and the relative distances between the respective tapping points (6, 19) and those partial areas on which the light is absorbed can be calculated from the proportions of the signals on several tapping points (6, 19).

2. Display area and a control unit combined with it according to claim 1, **characterised in that** a position detector (2) is structured as a strip-shaped, two-dimensional optical waveguide, on which photoelectrical sensors (6) are mounted as tapping points (6), from the measured signals of which it can be concluded what the position of a light point is that is hitting the control area, whereas at least one layer (5) of the strip-shaped, two-dimensional optical waveguide has photoluminescent characteristics.

3. Display area and a control unit combined with it for a data processing system according to claim 1, **characterised in that** a position detector (12) is embodied as a strip-shaped, two-dimensional position detector on the basis of a layer (15) of an organic photoactive material, which is connected on both sides by a flat electrode (16, 17), wherein one electrode (16) has a relatively high ohmic resistance within its circuit, whereas the current through this low-conductive electrode (16) is measured on several connecting points (19) that are spaced from each other and which serve as tapping points (19), and wherein the position of a local conductive connection through the photosensitive layer (15) that is caused by light absorption is calculated from the relative strengths of the different currents compared to each other, which are measured on the different connection points (19).

4. Display area and a control unit combined with it for a data processing system according to one of the claims above, **characterised in that** different cross-sectional areas of the pointer beam (3) are formed by radiations with different coding characteristics.

5. Display area and a control unit combined with it for a data processing system according to one of the claims above, **characterised in that** the spectrum of the pointer beam (3) that is detectable by the position detectors (2) is within a spectral area not visible to the human eye and that the pointer unit, which emits this pointer beam (3) can emit an additional pointer beam, simultaneously with the pointer beam (3), the colour spectrum of this additional pointer beam lying within the visible spectral range and the beam's cross section of this additional pointer beam having smaller dimensions than the ones of the pointer beam (3).

## Revendications

1. Surface d'affichage (1) et dispositif de commande combiné avec celle-ci pour une installation de traitement de données, la position d'un rayon lumineux incident (3) sur la surface d'affichage étant mesurée et le résultat de la mesure étant utilisé par l'installation de traitement de données comme base pour déterminer une position de curseur sur la surface d'affichage, des détecteurs de position (2) optiques en forme de bande étant de ce fait agencés le long du bord de la surface d'affichage (1), les signaux mesurés de ces derniers étant injectés dans l'installation de traitement de données, la forme de section transversale du rayon lumineux incident (3) étant formée par plusieurs lignes et les dimensions transversales du rayon lumineux incident (3) allant au-delà de la surface d'affichage (1) et des détecteurs de position (2) agencés sur cette dernière, **caractérisée en ce que** les détecteurs optiques sont formés par une structure en couche d'une matière organique, laquelle couche génère des signaux électriques en fonction de la lumière absorbée et est équipée d'une pluralité de points de prélèvement (6, 19) pour les signaux produits, la taille des signaux au niveau des différents points de prélèvement (6, 19) dépendant de leur éloignement des surfaces partielles au niveau desquelles la lumière est absorbée, et dans laquelle à partir des proportions entre les signaux à différents points de prélèvement (6, 19) il est possible de calculer les rapports d'éloignement des différents points de prélèvement (6, 19) par rapport aux surfaces partielles au niveau desquelles la lumière est absorbée.

2. Surface d'affichage et dispositif de commande combiné avec celle-ci selon la revendication 1, **caractérisée en ce qu'**un détecteur de position (2) est réalisé sous la forme d'une fibre optique plate en forme de bande, sur laquelle il est monté comme points de prélèvement (6) des capteurs photoélectriques (6), à partir des signaux mesurés desquels il est déterminé la position d'un point lumineux venant toucher la surface de commande, au moins une couche (5) de la fibre optique plate possédant des propriétés photoluminescentes.

3. Surface d'affichage et dispositif de commande combiné avec celle-ci pour une installation de traitement de données selon la revendication 1, **caractérisée en ce qu'**un détecteur de position (12) est réalisé en tant que détecteur de position plat en forme de bande sur la base d'une couche (15) à partir d'une matière organique photoactive, qui est raccordée des deux côtés par une électrode plate (16, 17), dans laquelle une électrode (16) présente à l'intérieur de son circuit une résistance ohmique relativement élevée, le courant à travers cette électrode (16) faiblement conductrice étant mesuré à différents points de raccordement (19) espacés les uns des autres servant de points de prélèvement (19), et où il est calculé à partir de la valeur relative des différents courants mesurés au niveau des différents points de prélèvement (19) la position d'une liaison conductrice locale à travers la couche photosensible (15), provoquée par l'absorption de la lumière.

4. Surface d'affichage et dispositif de commande combiné avec celle-ci pour une installation de traitement de données selon l'une des revendications précédentes, **caractérisée en ce que** différentes zones de section transversale du rayon lumineux incident (3) sont formées par des rayonnements avec différentes caractéristiques de codage.

5. Surface d'affichage et dispositif de commande combiné avec celle-ci pour une installation de traitement de données selon l'une des revendications précédentes, **caractérisée en ce que** le spectre du rayon lumineux incident (3) détectable par les détecteurs de position (2) se situe dans une plage spectrale non visible pour oeil humain et **en ce que**, par le dispositif de pointage qui envoie ce rayon lumineux incident (3), un rayon lumineux incident supplémentaire peut être envoyé en même temps que le rayon lumineux incident (3), le spectre de couleurs de ce premier se trouvant dans une plage spectrale visible et dont la surface de section transversale du rayon est plus petite que celle du rayon lumineux incident (3).
